(19) Europäisches Patentamt
European Patent Office
Office européen des brevets

(11) Veröffentlichungsnummer: **0 569 845 A1**

# (12) EUROPÄISCHE PATENTANMELDUNG

(21) Anmeldenummer: **93107312.6**

(22) Anmeldetag: **05.05.93**

(51) Int. Cl.[5]: **C07F 7/22**, C08G 18/24, C09D 5/44

(30) Priorität: **11.05.92 DE 4215479**

(43) Veröffentlichungstag der Anmeldung: **18.11.93 Patentblatt 93/46**

(84) Benannte Vertragsstaaten: **AT BE DE ES FR GB IT NL PT SE**

(71) Anmelder: **HOECHST AKTIENGESELLSCHAFT**

**D-65926 Frankfurt(DE)**

(72) Erfinder: **Hönel, Michael, Dr.**
**Bertha-von-Suttner-Strasse 14**
**W-6200 Wiesbaden(DE)**
Erfinder: **Ziegler, Peter, Dr.**
**Henry-Moisand-Strasse 40**
**W-6500 Mainz(DE)**
Erfinder: **Wehner, Susanne**
**Hofackerstrasse 1**
**W-6256 Villmar(DE)**
Erfinder: **Küper, Klaus**
**Karl-Zeller-Gasse 13**
**A-2542 Kottingbrunn(AT)**
Erfinder: **Völker, Achim, Dr.**
**Rüdesheimer Strasse 34**
**W-6200 Wiesbaden(DE)**

## (54) Umsetzungsprodukfe aus Dialkylzinnoxid und mehrwertigen Phenolen.

(57) Diese Umsetzungsprodukte eignen sich als Katalysatoren mit verbesserten Eigenschaften zum Aushärten von Lackbindemitteln.

EP 0 569 845 A1

Aus EP-B-0 261 486 ist bereits bekannt, bei kationischen Lackbindemitteln, die durch Umesterung, Umamidierung, Umurethanisierung oder durch die Reaktion endständiger Doppelbindungen ausgehärtet, d.h. vernetzt werden, als Katalysator Kondensationsprodukte aus Dialkylzinnoxid und Phenolen zu nehmen. Es hat sich aber gezeigt, daß diese Kondensationsprodukte nicht hinreichend stabil sind, was zu einer Abnahme der katalytischen Wirkung führt.

Es wurde nun gefunden, daß Umsetzungsprodukte aus Dialkylzinnoxid mit mehrwertigen Phenolen diese Nachteile nicht aufweisen und zusätzlich eine hervorragende katalytische (zeitkonstante) Wirkung besitzen.

Gegenstand der Erfindung sind Umsetzungsprodukte von Dialkylzinnoxid und mehrwertigen Phenolen sowie härtbare Mischungen mit einem Gehalt an diesen Umsetzungsprodukten.

Als mehrwertige Phenole zur Herstellung dieser Umsetzungsprodukte kommen vorzugsweise Verbindungen der folgenden Formeln I bis IV in Frage:

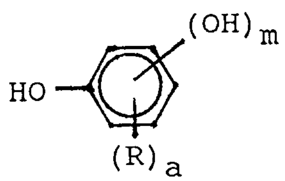

(I)

worin

R $C_1$-$C_{18}$-, vorzugsweise $C_1$-$C_4$-Alkyl, Phenyl, $C_1$-$C_{18}$-Alkylphenyl oder $C_5$-$C_6$-Cycloalkyl,
m eine Zahl von 1 bis 5, vorzugsweise 1 oder 2, und
a eine Zahl von Null bis 4 bedeuten, wobei der Wert für a kleiner oder gleich der Differenz 5 minus m ist.

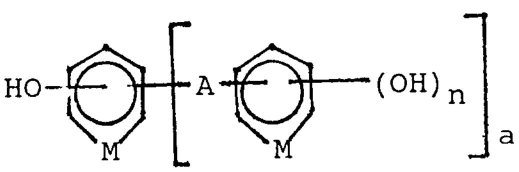

(II)

wobei

n und a 1 oder 2,
M eine Gruppe der Formel =CH-, ein Heteroatom, vorzugsweise ein Stickstoffatom,
A eine direkte Bindung oder eine Gruppe der Formeln
$-CH_2-$,

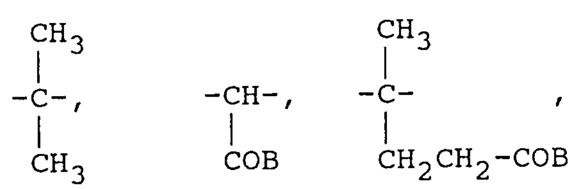

-SO-, -S-, $-SO_2-$, -S-S-, -CO-,
B eine Hydroxylgruppe oder eine Gruppe der Formeln
$-NH-(CH_2)_b-N(R)_2$ oder

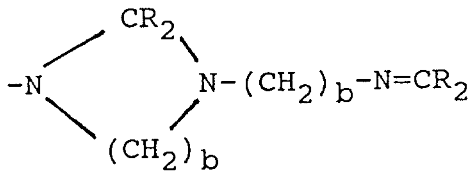

b eine Zahl von 1 bis 4, vorzugsweise 2 oder 3 bedeuten;

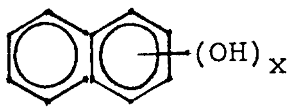 (III)

worin

x 2 oder 3 bedeutet;

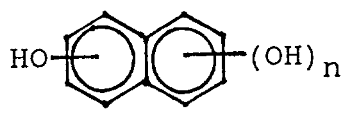 (IV)

worin

n 1 oder 2 bedeutet;

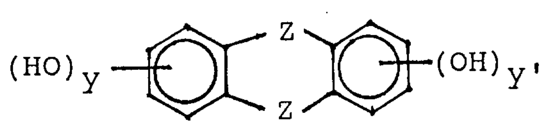 (V)

worin

y und y' jeweils 0, 1 oder 2 bedeuten, die Summe von y und y' mindestens 2 beträgt und

Z eine Gruppe der Formeln $=CH-$ oder $>C=O$ bedeutet.

Als mehrwertige Phenole seien beispielsweise folgende Verbindungen genannt: Phloroglucin, Pyrogallol, Hydroxyhydrochinon, 1,4-Dihydroxynaphthalin und dessen Stellungsisomere, wie zum Beispiel: 1,2-; 1,3-; 1,5-; 1,6-; 2,2'-Dihydroxybiphenyl und dessen Stellungsisomere, z. B. 4,4'- und 2,5-; 3,3'-Dihydroxy-2,2'-bipyridyl, Hydrochinon, Resorcin, Dihydroxyanthrachinon (z. B. Chinizarin, Anthraflavinsäure), Brenzkatechin, Bis-(2-hydroxyphenyl-) methan, Bis-(4-hydroxyphenyl-)methan, 2,2-bis(2-hydroxyphenyl-)propan, 2,2-Bis-(4-hydroxyphenyl-)propan (Bisphenol-A), 4,4-bis-(4-hydroxyphenyl-)valeriansäure und deren Amid, Bis-(4-hydroxyphenyl)-sulfon, Bis-(4-hydroxyphenyl-)sulfid, 2,2-Bis(4-hydroxyphenyl)-essigsäure und deren Amid.

Die genannten Phenole können einzeln oder im Gemisch eingesetzt werden. Besonders bevorzugt sind Bisphenol-A und Bis-(4-hydroxyphenyl-)essigsäure-N,N-dimethylaminopropylamid.

Die Herstellung der Reaktionsprodukte aus Dialkylzinnoxid und mehrwertigen Phenolen erfolgt durch Erhitzen der Reaktionspartner auf 80 bis 200 °C, vorzugsweise 80 bis 150 °C in einem nicht oder nur teilweise mit Wasser mischbaren organischen Lösemittel, das als Schleppmittel zum Auskreisen des Reaktionswassers dient. Nach Beendigung der Reaktion wird vom Lösemittel abfiltriert und das Reaktionsprodukt mit einem weiteren Lösemittel gewaschen.

Als Schleppmittel zum Auskreisen des Wassers kommen beispielsweise in Frage aromatische Lösemittel, wie zum Beispiel Benzol, Toluol, Xylol (bzw. Isomerengemisch), Solvesso; Ketone, wie zum Beispiel Methylisobutylketon, Methylamylketon, Cyclohexanon oder aliphatische Lösemittel, wie zum Beispiel n-Heptan, Cyclohexan.

Zum Auswaschen des fertigen Reaktionsprodukts eignen sich vorzugsweise solche Lösemittel, die die verwendeten Phenole lösen und einen Siedepunkt von unter 200 °C aufweisen, zum Beispiel Aceton, Ethylacetat, Ethoxypropylacet, Ethoxyethylpropionat, Tetrahydrofuran, Methylenchlorid, Diglycoldimethylether, N-Methylpyrrolidon oder auch die zuvor als Schleppmittel beschriebenen Lösemittel.

Das molare Verhältnis von Dialkylzinnoxid, vorzugsweise Dibutylzinnoxid (DBTO) zu Phenol, liegt bei 1 : 1,2 bis 1 : 0,01, vorzugsweise 1 : 0,75 bis 1 : 0,16. Für die bevorzugten difunktionellen Phenole liegt das Verhältnis bei 1 : 0,75 bis 1 : 0,2. Gegebenenfalls können bei der Herstellung der Reaktionsprodukte aus Dialkylzinnoxid und Phenol anteilig auch einwertige Phenole mitverwendet werden. In diesem Fall liegt das molare Verhältnis (Verhältnis Dialkylzinnoxid zur Summe aller Phenole) bei 1 : 1 bis 1 : 0,4 und das Verhältnis von mehrwertigem Phenol zu einwertigem Phenol beträgt 3 : 1 bis 0,33 : 1. Dabei muß die Menge aller phenolischen OH-Gruppen in den mehrwertigen Phenolen stets größer sein als die Menge der phenolischen OH-Gruppen in den einwertigen Phenolen. Diese Variante eignet sich vor allem zur Herstellung solcher Katalysatoren, die auf Basis der in Formel II definierten Phenole hergestellt werden, wenn diese Phenole die unter B aufgeführten Stickstoff enthaltenden Gruppen tragen. Als einwertige Phenole eignen sich vor allem Verbindungen der Formel I, worin m 0 ist.

Berechnet auf den Gehalt an metallischem Zinn werden die so erhaltenen Katalysatoren in Mengen von 0,1 bis 5, vorzugsweise 0,3 bis 1,5, insbesondere 0,5 bis 1 Gew.-%, bezogen auf den Feststoffanteil des Bindemittels, eingesetzt. Der Katalysator kann dem Bindemittel direkt zugegeben werden. Man kann den Katalysator aber auch zunächst in eine Pigmentpaste einarbeiten, die dann in den Lack gegeben wird, oder man suspendiert den Katalysator in einem Pastenharz und fügt dieses Pastenharz dem Lack zu.

Als Bindemittel in den härtbaren Mischungen kommen alle für diesen Zweck bekannten Harze in Frage, vorzugsweise solche Bindemittel, die durch Zugabe von Säuren wasserlöslich oder in Wasser emulgierbar sind und sich daher für den Einsatz in der Elektrotauchlackierung (KTL) eignen. Besonders geeignet sind diese Katalysatoren für KTL-Bindemittel, die isocyanatreaktive Gruppen in Form von $-NH_2$, -NH-, -OH, oder -SH-Gruppen tragen, wobei diese Gruppen durch sogenannte verkappte Polyisocyanate miteinander vernetzt werden. Geeignete Bindemittel sind Polymerisate, Polykondensate oder Polyadditionsverbindungen, die mit Isocyanatgruppen reaktive Gruppen enthalten, wie Hydroxyl- und/oder Amino-Gruppen, wobei von diesen im Mittel zumindest zwei pro Molekül vorhanden sind.

Die Funktionalität (NH, $NH_2$, OH) dieser Polymeren kann gemäß der Summe aus Aminzahl (nur auf NH, $NH_2$ bezogen) und Hydroxylzahl beispielsweise zwischen 20-1500, bevorzugt zwischen 100-1000 und besonders bevorzugt zwischen 100-500 liegen.

Beispiele für OH-gruppenhaltige Kunstharze (Polyole) sind Polyetherpolyole, Polyacetalpolyole, Polyesteramidpolyole, Epoxidharzpolyole oder deren Umsetzungsprodukte mit $CO_2$, Phenolharzpolyole, Polyharnstoffpolyole, Polyurethanpolyole, teilweise verseifte Homo- und Copolymerisate von Vinylestern, teilweise acetalisierte Polyvinylalkohole, Polyesterpolyole oder Acrylatharzpolyole. Weiterhin kommen hier OH-haltige Phenol-, Harnstoff- oder Melaminharze in Frage. Derartige Polyole, die auch in Mischung eingesetzt werden können, sind beispielsweise in der DE-OS 31 24 784 sowie in den EP-OS 123 880 und 189 728 beschrieben.

Bevorzugt sind Epoxidharzpolyole, Polyesterpolyole, Polyurethanpolyole, Polyetherpolyole und Acrylatharzpolyole.

Kunstharze (B), die Hydroxyl- und Aminogruppen enthalten, sind beispielsweise im Journal of Coatings Technology, Vol. 54, No. 686, (1982), S. 33 bis 41 ("Polymer Compositions for Cationic Electrodepositable Coatings") beschrieben, auf das Bezug genommen wird. Erwähnt seien hier Polymerisate aus $\alpha$, $\beta$-olefinisch ungesättigten Monomeren, die Hydroxy- und/oder Aminogruppen enthalten. Die Einführung der Hydroxy- und/oder Aminogruppen kann durch Verwendung entsprechender Monomere bei der Copolymerisation, z.B. durch Hydroxy- oder Aminoester von $\alpha,\beta$-olefinisch ungesättigten Carbonsäuren, wie Hydroxyalkyl(meth)acrylate oder Aminoalkyl(meth)acrylate, erfolgen oder durch polymeranaloge Umsetzung mit Di- oder Polyaminen, z.B. mit N,N-Dimethyl-aminopropylamin, unter Ausbildung von Amid-, Amino- oder Urethangruppen. Eine weitere Gruppe sind die aus dimerisierten Fettsäuren und Polyaminen erhältlichen Polyaminopolyamide oder die beispielsweise durch Umsetzung von Epoxydharzen mit primären oder sekundären Aminen zugänglichen Aminopolyetherpolyole, die sich besonders eignen. Diese sind beispielsweise durch Umsetzung von primären oder sekundären Aminen mit einem Polyglycidylether zugänglich. Dabei sollen so viele Epoxidgruppen vorhanden sein, daß alle markierten Aminogruppen in tertiäre Aminogruppen umgewandelt werden. Die bevorzugten Polyglycidylether sind Polyglycidylether von Bisphenol A und ähnlichen Polyphenolen. Man kann sie beispielsweise herstellen, indem man ein Polyphenol mit einem Epihalogenhydrin, wie Epichlorhydrin in Gegenwart von Alkali verethert.

Statt der Polyglycidylether lassen sich auch deren Umsetzungsprodukte mit $CO_2$ einsetzen. Diese Produkte enthalten cyclische Carbonatgruppen, die mit primären Aminen unter Ausbildung von Urethanen umgesetzt werden können. Je nach den Molverhältnissen von Polyglycidylether und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen. Derartige cyclische Carbonatgruppen lassen sich auch über entsprechende Monomere, welche diese Gruppen enthalten, in die Polymerenkette einführen; siehe hierzu die DE 36 44 372 und 36 44 373. Die Umsetzung derartiger cyclischer Carbonatgruppen enthaltender Polymere mit Aminen unter Bildung von sogenannten Aminourethanen ist beispielsweise in den EP 234 395 und 247 506 sowie in DE 36 44 370 beschrieben.

Die Polyglycidylether der Polyphenole oder deren Umsetzungsprodukte mit $CO_2$ können als solche mit den Aminen zur Reaktion gebracht werden, jedoch ist es häufig vorteilhaft, einen Teil der reaktionsfähigen Epoxidgruppen mit einem modifizierenden Material umzusetzen, um die Filmeigenschaften zu verbessern. Besonders bevorzugt ist die Umsetzung der Epoxidgruppen mit einem Polyol, einer Polycarbonsäure oder einem Polyamin. Diese Modifizierung erfolgt bevorzugt vor der Umsetzung der Polyglycidylether oder deren Umsetzungsprodukte mit $CO_2$ mit den primären oder sekundären Aminen. Es ist jedoch auch möglich, das Verhältnis des als Ausgangsmaterial verwendeten Polyglycidylethers zu den Aminen so zu wählen, daß ein Überschuß an Epoxidgruppen vorhanden ist. Die Epoxidgruppen können dann mit den Polycarbonsäuren oder Polyolen umgesetzt werden. Weiterhin ist es möglich, das Endprodukt, das keine Epoxidgruppen mehr enthält, durch Reaktion der Hydroxylgruppen mit Glycidylethern weiter zu modifizieren.

Bei der Verwendung in Elektrotauchlacken ist die Anzahl an basischen Gruppen in dem Bindemittel so zu wählen, daß eine ausreichende Wasserverdünnbarkeit im sauren Milieu gewährleistet ist.

Die Härtung dieser Bindemittel erfolgt vorzugsweise durch Reaktion mit sogenannten Härtern in Form von teilverkappten Polyisocyanaten.

Als Polyisocyanate können beliebige auf dem Polyurethan- bzw. Lackgebiet bekannte Polyisocyanate eingesetzt werden, beispielsweise aliphatische, cycloaliphatische oder aromatische Polyisocyanate. Typische Beispiele für die verwendeten Polyisocyanate sind 2,4- oder 2,6-Toluylendiisocyanate, Xylylendiisocyanat, Diphenylmethan-4,4'-diisocyanat, Triphenylmethantriisocyanat, Polyphenyl-polymethyl-isocyanat, Hexamethylendiisocyanat sowie Tri- und Tetramethylhexamethylendiisocyanat, 2,2,4(2,4,4)-Methylcyclohexyldiisocyanat, Isophorondiisocyanat, Dicyclohexylmethyldiisocyanat, Diethylfumarhexylisocyanat, Bis-(3-Methyl-4-isocyanatocyclohexyl)-methan, 2,2-Bis-(4-isocyanatcyclohexyl)- propan, den Methylester des Lysindiisocyanats, das Biuret des Hexamethylendiisocyanats, Diisocyanate dimerer Säuren, 1-Methyl-benzol-2,4,5-triisocyanat, Biphenyl-2,4,4'-triisocyanat, das Triisocyanat aus 3 Mol Hexamethylendiisocyanat und 1 Mol Wasser mit 16 % NCO-Gehalt.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodimidgruppen, Allophonatgruppen, Isocyanuratgruppen, Urethangruppen, acylierte Harnstoffgruppen oder Biuretgruppen aufweisen.

Geeignete Polyisocyanate sind schließlich auch die bekannten, endständige Isocyanatgruppen aufweisenden Präpolymere, wie sie insbesondere durch Umsetzung der obengenannten einfachen Polyisocyanate, vor allem Diisocyanate mit überschüssigen Mengen an organischen Verbindungen mit mindestens zwei gegenüber Isocyanatgruppen reaktionsfähigen Gruppen zugänglich sind. Weitere geeignete Polyisocyanate sind beispielsweise in DE 36 44 372 beschrieben. Es können auch Gemische der verschiedenen Polyisocyanate verwendet werden.

Als Verkappungsmittel eignen sich aliphatische, cycloaliphatische oder alkylaromatische (einwertige) Alkohole, z.B. niedere aliphatische Alkohole wie Methyl-, Ethylalkohol, die verschiedenen Propyl-, Butyl- und Hexylalkohole, Heptyl-, Octyl-, Nonyl-, Decylalkohol und ähliche; ferner ungesättigte Alkohole wie Propargyl- und Allylalkohole, cycloaliphatische Alkohole wie Cyclopentanol, Cyclohexanol, alkylaromatische Alkohole wie Benzylalkohol, Methyl- sowie p-Methoxy- und p-Nitrobenzylalkohol, $\alpha$-Hydroxyalkylpyridine, Furfurylalkohol und Monoether von Glykolen wie Ethylen-glykolmonoethylether, -monobutylether, Methoxypropanol, 3-Methyl-3-Methoxybutanol und ähnliche. Weitere Verkappungsmittel sind Ketoxime, zweckmäßigerweise mit 3 bis 20 C-Atomen, vorzugsweise 3 bis 10 C-Atomen, wie Acetonoxim, Methylethylketonoxim (= Butanonoxim), Hexanonoxim (wie Methyl-Butylketonoxim), Heptanonoxim (wie Methyl-n-Amylketonoxim), Actanonoxim und Cyclohexanonoxim; weiterhin CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole, wie Dimethylethanolamin oder Diethylethanolamin. Diese Aminoalkohole können beispielsweise auch in Gemisch mit den anderen angegebenen Verkappungsmitteln benutzt werden, etwa in Mengen von bis zu 25 Mol.-%, insbesondere 6 - 12 Mol.-%, bezogen auf die Mischung. Das als Blockierungsmittel bekannte Phenol kann insbesondere in solchen Fällen eingesetzt werden, bei denen das Umsetzungsprodukt zur Herstellung von nichtwäßrigen Lacken verwendet wird.

Das Verhältnis von Härter und Bindemittel richtet sich nach der gewünschten Vernetzungsdichte und hängt von der Funktionalität des Härters (d.h. der Gesamtmenge an vernetzungsaktiven, verkappten Isocyanatgruppen, die anteilsweise auch durch das Bindemittel eingebracht werden können) und der Funktionalität des Bindemittels (Anzahl der Hydroxyl- und/oder Aminogruppen) ab. Im allgemeinen liegt die Menge an Härter bei 5 bis 85, vorzugsweise bei 25 bis 48 Gew.-%, bezogen auf die Summe an Härter und

Bindemittel.

Als Verdünnungsmittel kommen die üblichen Lacklösemittel in Frage. Vorzugsweise wird hierfür jedoch Wasser, gegebenenfalls im Gemisch mit organischen Lösungsmitteln, eingesetzt. Für derartige wäßrige Systeme, die bevorzugt als Elektrotauchlacke verwendet werden, ist es vorteilhaft, die basischen Aminogruppen teilweise oder vollständig zu neutralisiseren, um damit Lackzubereitungen zu erhalten, die aus wäßriger Lösung bei einem Bad-pH zwischen etwa 3 und 9 elektrisch abgeschieden werden können. Die Neutralisation der basischen Gruppen wird im allgemeinen mit wasserlöslichen Säuren, beispielsweise Ameisensäure, Essigsäure, Milchsäure oder Phosphorsäure oder entsprechenden Mischungen vorgenommen. Die Säuremenge hängt im Einzelfall von den Eigenschaften des verwendeten Harzes ab und wird im allgemeinen nur so weit durchgeführt, daß das Harz solubilisiert oder in eine stabile, wäßrige Emulsion (bzw. Dispersion) übergeführt wird. Im allgemeinen werden dafür Neutralisationsgrade (NG) von 20 bis 70 % benötigt.

Die Feststoffgehalte des Elektrotauchlackes liegen im allgemeinen bei 10 bis 30 Gew.-%.

Als übliche Zusatzstoffe, die eventuell in der erfindungsgemäßen härtbaren Mischung vorhanden sein können, seien hier - in Abhängigkeit von dem jeweiligen Verwendungszweck - die üblichen Lackadditive wie Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidatien, (UV-)Stabilisatoren` Verlauf- bzw. Verdickungsmittel, Entschäumer und/oder Netzmittel, Reaktivverdünner, Füllstoffe (Talkum, Glimmer, Kaolin, Kreide, Quarzmehl, Asbestmehl, Schiefermehl, verschiedene Kieselsäuren, Silikate etc.) und dergleichen genannt. Diese Additive können der Mischung gegebenenfalls erst unmittelbar vor der Verarbeitung zugegeben werden.

**Beispiele:**

Alle Mengenangaben sind in Gewichtsteilen.

**1. Herstellung der Organozinnverbindungen:**

1.1. 498 T (2 Mol) Dibutylzinnoxid* werden mit 228 T Bisphenol A (1 Mol) und 484 T Methyl-**i**-butylketon vermengt und langsam auf 90 °C erwärmt. Dabei wird die Mischung homogen und hochviskos. Anschließend wird entstehendes Reaktionswasser ausgekreist (18 T) und die Temperatur auf 100 bis 120 °C gesteigert. Nach beendeter Reaktion wird die Mischung abgekühlt, das anfallende feinpulverige Reaktionsprodukt wird vom Lösemittel befreit und mehrmals mit insgesamt 300 T Ethylacetat gewaschen.

Ausbeute: 98 %, Gehalt an metallischem Zinn (bestimmt als $SnO_2$ über Ascherückstand): 33,0 ± 0,3 %, Fp. = bis 200 °C keine Veränderung

* (Fascat 4201 der Fa. ATO-Chem, Deutschland GmbH, Düsseldorf, ca. 47,7 % metallisches Zinn)

1.2. Analog Beispiel 1.1. wurden 249 T Dibutylzinnoxid (1 Mol) und 228 T Bisphenol A (1 Mol) in 318 T Methyl-**i**-butylketon zur Reaktion gebracht (18 T $H_2O$) und aufgearbeitet.

Ausbeute: 72 %, Gehalt an metallischem Zinn: 33,5 ± 0,3 %

1.3. Analog Beispiel 1.1. wurden 498 T Dibutylzinnoxid (2 Mol) mit 140 T Resorcin (1 Mol) in 425 T Methyl-**i**-butylketon zur Reaktion gebracht (18 T $H_2O$) und aufgearbeitet.

Ausbeute: 98 %, Gehalt an metallischem Zinn: 40,0 ± 0,3 %, Fp = bis 200 °C, keine Veränderung

1.4.

A) 244 T 2,2-Bis-(4-hydroxyphenyl-)essigsäure (1 Mol) in 230 T Methyl-**i**-butylketon werden unter Kühlung mit 102 T N,N-Dimethylaminopropylamin-1,3 (1 Mol) langsam bei 20 - 35 °C versetzt. Anschließend wird die Temperatur auf 100 - 120 °C gesteigert und Reaktionswasser (18 T) ausgekreist. Nach beendeter Reaktion wird auf 20 - 25 °C abgekühlt.

B) Das unter 1.4. A) erhaltene Reaktionsprodukt wird mit 790 T Methyl-**i**-buylketon, 188 T Phenol (2 Mol) und anschließend mit 996 T Dibutylzinnoxid (4 Mol) versetzt und auf 90 - 100 °C erwärmt. Das entstehende Reaktionswasser (36 T) wird ausgekreist, wobei in der Schlußphase die Temperatur bis ca. 120 °C gesteigert werden kann. Anschließend wird abgekühlt, von MiBK befreit und mit 600 T Ethylacetat portionsweise gewaschen.

Ausbeute: 92 %, Gehalt an metallischem Zinn: 32,0 ± 0,3 % Fp = bis 200 °C, keine Veränderung

C) Das unter 1.4. B) erhaltene Reaktionsprodukt wird mit 339 T Butylglykol aufgerührt, gekühlt (20 - 35 °C) und portionsweise mit 248 T wäßriger Milchsäure (25%ig) versetzt (MEQ = 50,8). Anschließend werden 1450 T deionisiertes Wasser langsam, unter guter Rührung bei 30 - 50 °C, zugegeben. Die anfallende 40%ige wäßrige Emulsion ist nahezu blank und stabil.

(Gehalt an metallischem Zinn: 12,8 ± 0,2 % auf 40%ige Dispersion)

## 2. Herstellung der Pigmentpaste

### 2.1. für Vergleichszwecke

Nach Beispiel 2 der AT-Patentschrift 380 264 wurde ein Pastenbindemittel hergestellt. Dazu werden in einem Reaktionsgefäß 320 Teile eines Epoxidharzes auf Basis von Polypropylenglykol (Äquivalentgewicht ca. 320) bei 75 bis 80 °C mit 134 T Talgfettamin und 52 T Diethylaminopropylamin bis zu einem Epoxidwert von 0 umgesetzt. Nach Zugabe von 30 T Paraformaldehyd (91%ig) wurden mit Spezialbenzin (Kp = 80 bis 120 °c) 19 T Reaktionswasser abgezogen und das Schleppmittel anschließend im Vakuum abdestilliert. Dann wurde mit Butylglykol auf 55 % Festkörper (1 h, 125 °C) eingestellt.

Das so erhaltene Pastenharz wurde dann mit den übrigen Bestandteilen der nachstehenden Rezeptur gemäß der in der DE-Patentanmeldung P 37 26 497.4 und 39 40 781 beschriebenen Verfahrensweise zu einer Pigmentpaste verarbeitet (Paste A - D):

| | A<br>0,5 %Sn/<br>Bm.f.(Bad) | B<br>1,0 %Sn/<br>Bm.f.(Bad) | C<br>1,5 %Sn/<br>Bm.f.(Bad) | D<br>Blindwert |
|---|---|---|---|---|
| 1. Pigmentpastenharz/55%ig | 14,29T | 14,29T | 14,29T | 14,29T |
| 2. Essigsäure/50%ig wäßrig | 0,85T | 0,85T | 0,85T | 0,85T |
| 3. Surfynol 104/s-Butanol (1:1) | 1,50T | 1,50T | 1,50T | 1,50T |
| 4. Dibutylzinnoxid | 1,24T | 2,47T | 3,70T | - |
| 5. Bleisilikat EP 202 | 4,04T | 4,04T | 4,04T | 4,04T |
| 6. Ruß Printex 25 | 0,41T | 0,39T | 0,37T | 0,37T |
| 7. $TiO_2$ RSE 50 | 41,45T | 40,22T | 38,99T | 42,69T |
| 8. VE-Wasser | 36,22T | 36,22T | 36,22T | 36,22T |
| | 100,00T | 100,00T | 100,00T | 100,00T |

Festkörper (1 h, 125 °C) = 55%, PBV = 6:1

Bm.f. = Bindemittel fest
PBV = Pigment-Bindemittelverhältnis
VE = voll entsalzt

Position 1. wird vorgelegt und anschließend werden unter Rühren (Dissolver) die Positionen 2. bis 4. zugegeben und während 8 Stunden bei 40 - 50 °C verrührt. Anschließend wird mit Position 5. bis 8. versetzt und mindestens 8 Stunden einsumpfen gelassen. Anschließend werden SAZ-Perlen (Ø 2 mm) zugegeben und in einem doppelwandigen (kühlbaren) Rührgefäß angerieben (ca. 1 - 2 Stunden) bis eine mittlere Teilchengröße von < 2 µm erreicht wird (Temperatur < 60 °C).

**2.2. mit den erfindungsgemäßen Katalysatoren gemäß Beispiel 1.1. bis 1.4.B):**

Analog Beispiel 2.1. wurden mit dem dort beschriebenen Pigmentpastenharz Pigmentpasten gemäß nachstehender Rezeptur gefertigt:

| | A<br>0,5 %Sn/<br>Bm.f.(Bad) | B<br>1,0 %Sn/<br>Bm.f.(Bad) | C<br>1,5 %Sn/<br>Bm.f.(Bad) | Katalysator-<br>Beispiel |
|---|---|---|---|---|
| 1. Pigmentpastenharz/55% | 14,29T | 14,29T | 14,29T | |
| 2. Essigsäure/50% | 0,85T | 0,85T | 0,85T | |
| 3. Surfynol:Sek.Butanol(1:1) | 1,50T | 1,50T | 1,50T | |
| 4. Zinnkatalysator | a 1,76T | a 3,52T | a 5,28T | 1.1 |
| | b 1,76T | b 3,52T | b 5,28T | 1.2 |
| | c 1,59T | c 3,19T | c 4,78T | 1.3 |
| | d 1,84T | d 3,69T | d 5,53T | 1.4 B) |
| 5. Bleisilikat EP 202 | 4,04T | 4,04T | 4,04T | |
| 6. Ruß Printex 25 | 0,41T | 0,39T | 0,37T | |
| 7. $TiO_2$ RSE 50 | a 40,93T | a 39,19T | a 37,45T | |
| | b 40,93T | b 39,19T | b 37,45T | |
| | c 41,10T | c 39,52T | c 37,95T | |
| | d 40,85T | d 39,02T | d 37,20T | |
| 8. VE-Wasser | 36,22T | 36,22T | 36,22T | |
| | 100,00T | 100,00T | 100,00T | 100,00T |

Festkörper (1 h, 125 °C) = 55%, PBV = 6:1

Position 1. wird vorgelegt und anschließend mit Position 2. bis 8. unter Rühren (Dissolver) versetzt und mindestens 8 Stunden einsumpfen gelassen. Anschließend werden SAZ-Perlen (R) (Ø ca. 2 mm) zugegeben und in einem doppelwandigen (kühlbaren) Rührgefäß angerieben (ca. 1 - 2 Stunden) bis eine mittlere Teilchengröße von < 2 µm erreicht wird (Temperatur < 60 °C).

Alle Pasten (Beispiel 2.1. und 2.2.) werden anschließend über ein Sieb von den Perlen befreit und vor Einsatz in der Lackzubereitung über ein Perlonsieb (Maschenweite 30 µm) filtriert.

**3. Herstellung der Lackbindemittel**

**3.1. Herstellung der verkappten Polyisocyanate**

A) Zu 174 Teilen Desmodur$^R$ T 80 (80 % 2,4-, 20 % 2,6-Toluylendiisocyanat; ca. 1 Mol) wurden bei 40 - 60 °C während 60 - 120 min 124 Teile (1,05 Mol) Butylglykol und 0,3 Teile Dibutylzinnlaurat (DBTL) einlaufen gelassen und anschließend bis zu einem % NCO-Wert von ca. 12,8 - 13,5 bei dieser Temperatur gehalten.

B) Zu 298 Teilen der Verbindung A) in 38 Teilen Toluol wurden portionsweise 42,4 Teile Trimethylolpropan eingebracht und bei 80 - 100 °C bis zu einem % NCO-Wert von Praktisch 0 umgesetzt. Anschließend wird mit 189 T Methoxypropanol auf ca. 60 % Festörper eingestellt (ca. 51 % TDI auf fest).

**3.2. Bereitung der Bindemittel-Hydroxylkomponente**

Analog der EP-Offenlegungsschrift 86, Beispiel 31, wurde ein Epoxidaminaddukt wie folgt hergestellt: 210 Teile Diethanolamin, 102 Teile N,N-Dimethylaminopropylamin und 636 Teile eines Adduktes aus 1 Mol 2-Methylpentamethylendiamin und 2 Mol Glycidylester der Versaticsäure (Cardura$^R$ E 10) wurden zu 3400 Teilen Bisphenol-A-Epoxidharz (Äquivalentgewicht ca. 480) in 2341 Teilen Methoxypropanol-2 (ca. 65%ig) gegeben. Das Reaktionsgemisch wurde 4 Stunden unter Rühren bei 60 bis 90 °C und dann eine Stunde bei 120 °C gehalten.

Hydroxylzahl: ca. 155 mg KOH/g Festharz

Aminzahl: ca. 77 mg KOH/g Festharz

**3.2.1. Bereitung einer Bindemittel-Aminokomponente**

608 T eines Carbonats auf Basis Cardura E 10, 2096 T Biscarbonat auf Basis eines Bisphenol-A-Epoxidharzes mit einem Äquivalentgewicht von ca. 524 (bzw. 480 bezogen auf Epoxidgruppen) werden in 2098 T Toluol mit 1192 T Verbindung 3.1.A.) bei 40 - 60 °C bis zu einem %NCO-Wert von < 0,2 umgesetzt. Anschließend wird mit 321 T Methoxypropanol verdünnt und bei 60 - 80 °C mit 623,5 T Bishexamethylentriamin (2,9 Mol) bis zu einer Aminzahl von 36 mg KOH/g Festharz umgesetzt (ca. 65 % Festkörper, ca. 15,5 % TDI).

**3.3. Bereitung der Bindemittel-Dispersion**

C Teile Bindemittel-Aminokomponente 3.2.1., A Teile Bindemittel-Hydroxylkomponente/65%ig (3.2.) wurden mit B Teilen Härterlösung/60%ig (3.1.), 5 Teilen Texanol, 2 Teilen 2-Ethylhexanol und 3,22 Teilen 50%iger wäßriger Ameisensäure (MEQ ca. 35) vermischt und im Vakuum (bis zu 20 mbar) bei Temperaturen bis zu 80 °C auf 85 - 90 % Festkörper eingeengt. Anschließend wurde mit 139 Teilen entionisiertem Wasser bei guter Rührung eine ca. 40%ige Dispersion hergestellt und über ein Perlonsieb (Maschenweite 30 µm) filtriert.

| Beispiel | Teile | | | % TDI | (in % NCO) entkappungsaktives Urethan |
|---|---|---|---|---|---|
| | A | B | C | | |
| 3.3.1. | 118,3 | 38,5 | - | 11,80 | 2,85 |
| 3.3.2. | 77,0 | 33,3 | 46,0 | 14,85 | 3,58 |

## 4. Lackzubereitung/Prüfkombinationen

3000 Teile Bindemitteldispersion/40%ig (gemäß Beispiele 3.3.1. und 3.3.2.) werden unter Rühren mit 1800 Teilen VE-Wasser, auf ca. 25 % Festkörper verdünnt. Diese Klarlacklösung wird mit 1091 Teilen Pigmentpaste (gemäß Beispielen 2.1. und 2.2.) und ca. 12,8 Teilen 50%iger Ameisensäure versetzt. Anschließend wird mit VE-Wasser auf einen Festkörper von ca. 18 % eingestellt (PBV ca. 0,4 : 1)

Im Falle der Lackzubereitung 4.21. wird mit Pigmentpaste 2.1.D. versetzt und nach Zugabe der Ameisensäure wird mit 100 Teilen Katalysatoremulsion gemäß Beispiel 1.4.C. versetzt.

### Einsatz als Elektrotauchlack

Die Lackzubereitungen wurden der kataphoretischen Abscheidung in einem offenen Glasgefäß unterworfen. Als Kathode diente zinkphosphatiertes Stahlblech und als Anode, im Abstand von 5 bis 10 cm von der Kathode, blankes Stahlblech. Die Badtemperatur lag bei 32 °C, die Abscheidedauer betrug 2 min. Die Rührung erfolgte über einen teflonbeschichteten Magnetrührstab.

Die jeweils erzielten Filmdicken und die Eigenschaften der abgeschiedenen und anschließend gehärteten Filme (Einbrennbedingungen: 20 min Ofentemperatur) sind in nachstehender Tabelle in zusammengefaßter Form wiedergegeben:

prüfkombinationen:

| Lack-Beispiel | Bindemittel-Dispersion | %Sn auf Bm. f. | Pigmentpaste | |
|---|---|---|---|---|
| 4.1. | 3.3.1. | 0,5 | 2.1.A. | Vergleichsbeispiele |
| 4.2. | 3.3.1. | 1,0 | 2.1.B. | |
| 4.3. | 3.3.1. | 1,5 | 2.1.C. | |
| 4.4. | 3.3.2. | 0,5 | 2.1.A. | |
| 4.5. | 3.3.2. | 1,0 | 2.1.B. | |
| 4.6. | 3.3.2. | 1,5 | 2.1.C. | |
| 4.7. | 3.3.1. | 0,5 | 2.2.A.a. | Katalysator 1.1. |
| 4.8. | 3.3.1. | 1,0 | 2.2.B.a. | |
| 4.9. | 3.3.1. | 1,5 | 2.2.C.a. | |
| 4.10. | 3.3.2. | 0,5 | 2.2.A.a. | |
| 4.11. | 3.3.2. | 1,0 | 2.2.B.a. | |
| 4.12. | 3.3.2. | 1,5 | 2.2.C.a. | |
| 4.13. | 3.3.1. | 0,5 | 2.2.A.b. | Katalysator 1.2. |
| 4.14. | 3.3.1. | 1,0 | 2.2.B.b. | |
| 4.15. | 3.3.1. | 0,5 | 2.2.A.c. | Katalysator 1.3. |
| 4.16. | 3.3.1. | 1,0 | 2.2.B.c. | |
| 4.17. | 3.3.1. | 1,5 | 2.2.C.c. | |
| 4.18. | 3.3.2. | 0,5 | 2.2.A.c. | |
| 4.19. | 3.3.2. | 1,0 | 2.2.B.c. | |
| 4.20. | 3.3.2. | 1,5 | 2.2.C.c. | |
| 4.21. | 3.3.1. | 1,0 | 2.1.D. | Katalysator 1.4.C. |

Prüfergebnisse:

Einbrenntemperatur: 165 °C, Einbrennzeit: 20 min. Schichtdicken der eingebrannten Beschichtungen: 20-22 µm

| Lackbeispiel | Aceton test [ s ] | Schlagtiefung* nach 1 Woche / 4 Wochen [inch•pound] | Schlagtiefung** nach 1 Woche / 4 Wochen [inch•pound] | Siebrückstand nach 1 Woche / 4 Wochen [mg / 1] |
|---|---|---|---|---|
| 4.1 | <5 | ---/--- | ---/--- | <5 / 20 |
| 4.2 | 15 | ---/--- | ---/--- | 8 / 28 |
| 4.3 | >120 | 100/80 | 40/4 | 20 / 67 |
| 4.4 | <5 | ---/--- | ---/--- | 6 / 18 |
| 4.5 | 30 | ---/--- | ---/--- | 5 / 33 |
| 4.6 | >120 | 100/100 | 40/10 | 30 /85 |
| 4.7 | 30 | ---/--- | ---/--- | <5 / <5 |
| 4.8 | >120 | 140/140 | 60/60 | <5 / 20 |
| 4.9 | >120 | 140/160 | 60/60 | <5 / 22 |
| 4.10 | 30 | ---/--- | ---/--- | <5 / <5 |
| 4.11 | >120 | 140/140 | 60/60 | <5 / 12 |
| 4.12 | >120 | 140/160 | 60/60 | <5 / 15 |
| 4.13 | 30 | ---/--- | ---/--- | <5 / 15 |
| 4.14 | >120 | 100/80 | ---/--- | 15 / 38 |
| 4.15 | <5 | ---/--- | ---/--- | <5 / 12 |
| 4.16 | 15 | ---/--- | ---/--- | 7 / 18 |
| 4.17 | >120 | 100/80 | ---/--- | 13 / 29 |
| 4.18 | <5 | ---/--- | ---/--- | <5 / 12 |
| 4.19 | 15 | ---/--- | ---/--- | 5 / 18 |
| 4.20 | >120 | 140/120 | ---/--- | 12 / 25 |
| 4.21 | >120 | 100/100 | 60/60 | 10 / 28 |
| * Bestimmt nach ASTM D 2794, nur an gehärteten Schichten geprüft; Prüftemperatur : * 20 ° C (** - 20 ° C); 1 inch • pound = $1.152 \cdot 10^{-2}$ m•kg | | | | |

Der Siebrückstand und der "Acetontest" wurden folgendermaßen bestimmt bzw. durchgeführt:

**Siebrückstand**

1 l der verdünnten Lacklösung wurde durch ein gewogenes Perlonsieb (Maschenweite 30 µm) gegossen. Das Sieb wurde dann mit deionisiertem Wasser nachgespült und nach Trocknung (1 h/125 ° C) gewogen. Die Differenz der beiden Wägungen ergibt den Siebrückstand in mg auf 1000 ml Bad bezogen.

**"Acetontest"**

Die beschichteten Bleche werden während 20 min (Umluftofen) eingebrannt (Temperatur siehe Beispiele). Anschließend wird die Lackoberfläche mit einem ca. 1 $cm^3$ großen, acetongetränkten Wattebausch bei 20 bis 25 ° C belastet. Verdunstendes Aceton wird diskontinuierlich, aber in kurzen Zeitabständen (ca. 20 bis 30 s) über eine Pipette ergänzt. Während dieser Belastung wird mit einem Fingernagel in 15 s Abständen die Aushärtung des Filmes an der belasteten Stelle getestet. Die angegebene Zeit entspricht dem Zeitpunkt wo erstmalig eine Verletzung der Oberfläche auftritt in Abhängigkeit von der Einbrenntemperatur (maximale Testdauer 2 min).

**Vergleichsergebnisse entsprechen EP 0 261 486**

Als Vergleich zu den in der vorliegenden Anmeldung beanspruchten Umsetzungsprodukten von Dibutylzinnoxid mit Polyphenolen wurden die in der EP 0 261 486 beschriebenen Katalysatoren KI (DBTO mit Nonylphenol, 26 % met. Sn) und K2 (DBTO mit 2-Ethylhexanol, 24 % met. Sn) hergestellt. Mit diesen Katalysatoren wurden folgende Pigmentpasten formuliert:

| **K 1** | **A** 0,5% Sn/Bm.f. (Bad) | **B** 1,0% Sn/Bm.f. (Bad) | **C** 1,5% Sn/Bm.f. (Bad) |
|---|---|---|---|
| Pigmentpastenharz / 55% | 14,29 T | 14,29 T | 14,29 T |
| Essigsäure / 50% | 0,85 T | 0,85 T | 0,85 T |
| Surfynol : sek. | 1,50 T | 1.50 T | 1,50 T |
| Butanol (1:1) Zinnkatalysator K1 | 2,23 T | 4,46 T | 6,69 T |
| Bleisilikat EP 202 | 4,04 T | 4,04 T | 4,04 T |
| Ruß Printex 25 | 0,40 T | 0,38 T | 0,36 T |
| $TiO_2$ RSE 50 | 40,47 T | 38,26 T | 36,05 T |
| VE-Wasser | 36,22 T | 36,22 T | 36,22 T |

| **K 2** | **A** 0,5% Sn/Bm.f. (Bad) | **B** 1,0% Sn/Bm.f. (Bad) | **C** 1,5% Sn/Bm.f. (Bad) |
|---|---|---|---|
| Pigmentpastenharz / 55% | 14,29 T | 14,29 T | 14,29 T |
| Essigsäure / 50% | 0,85 T | 0,85 T | 0,85 T |
| Surfynol : sek. | 1,50 T | 1,50 T | 1,50 T |
| Butanol (1:1) Zinnkatalysator K2 | 2,42T | 4,84T | 7,26T |
| Bleisilikat EP 202 | 4,04T | 4,04T | 4,04T |
| Ruß Printex 25 | 0.40T | 0,38T | 0,36T |
| $TiO_2$ RSE 50 | 40,28T | 37,88T | 35,48T |
| VE-Wasser | 36,22T | 36,22T | 36,22T |

Mit diesen Pigmentpasten und den Bindemitte-Dispersionen 3.3.1. und 3.3.2. wurden folgende Prüfkombinationen formuliert:

Prüfkombinationen:

| Lack-Beispiel | Bindemittel-Dispersion | %Sn auf Bm. f. | Pigmentpaste |
|---|---|---|---|
| 4.22. | 3.3.1. | 0,5 | K1A |
| 4.23. | 3.3.1. | 1,0 | K1B |
| 4.24. | 3.3.1. | 1,5 | K1C |
| 4.25. | 3.3.2. | 0.5 | K1A |
| 4.26. | 3.3.2. | 1,0 | K1B |
| 4.27. | 3.3.2. | 1,5 | K1C |
| 4.28. | 3.3.1. | 0.5 | K2A |
| 4.29. | 3.3.1. | 1,0 | K2B |
| 4.30. | 3.3.1. | 1,5 | K2C |
| 4.31 | 3.3.2. | 0,5 | K2A |
| 4.32. | 3.3.2. | 1,0 | K2B |
| 4.33. | 3.3.2. | 1,5 | K2C |

Mit diesen Lackbeispielen wurden folgende Resultate erreicht:

Prüfergebnisse:

| Lackbeispiel | Acetontest [ s ] | Schlagtiefung* nach 1 Woche / 4 Wochen [inch•pound] | Schlag tiefung** nach 1 Woche / 4 Wochen [inch•pound] | Siebrück stand nach 1 Woche / 4 Wochen [ mg / l ] |
|---|---|---|---|---|
| 4.22. | <5 | ---/--- | ---/--- | <5 / 16 |
| 4.23. | 15 | ---/--- | ---/--- | <5 / 23 |
| 4.24. | >120 | 80/80 | 80/4 | 25 / 150 |
| 4.25. | >5 | ---/--- | ---/--- | <5 /<5 |
| 4.26. | 30 | ---/--- | ---/--- | 25 / 29 |
| 4.27. | >120 | 100/100 | 40/20 | 33 / 68 |
| 4.28. | <5 | ---/--- | ---/--- | <5 / 30 |
| 4.29. | <5 | ---/--- | ---/--- | 14 / 25 |
| 4.30. | 30 | ---/--- | ---/--- | 27 / 75 |
| 4.31. | <5 | ---/--- | ---/--- | <5 / 11 |
| 4.32. | <5 | ---/--- | ---/--- | 10 / 52 |
| 4.33. | 30 | ---/--- | ---/--- | 15 / 58 |
| * Bestismmt nach ASTM, nur an gehärteten Schichten geprüft;<br>Prüftemperatur: *20 ° C (** -20 ° C); 1 bzw. 4 Wochen bezieht sich auf gealtertes Bad.<br>ASTM D 2794 1 inch pound = 1.152 • $10^{-2}$ m • kg | | | | |

Die erhaltenen Ergebnisse zeigen einen deutlichen Vorteil der erfindungsgemäßen Katalysatoren gegenüber den Vergleichsprodukten oder dem nicht umgesetzten Dibutylzinnoxid. Der Vorteil besteht,

neben der einfacheren Einarbeitung in die Pigmentpaste, in einer besseren Zeitkonstanz der Wirksamkeit der erfindungsgemäßen Zinn-Katalysatoren und deren verbesserter Effizienz, d.h. geringeren Einsatzmenge, um eine Aushärtung der Beschichtungen zu erreichen.

## Patentansprüche

1. Umsetzungsprodukte von Dialkylzinnoxid und mehrwertigen Phenolen.

2. Umsetzungsprodukte nach Anspruch 1, dadurch gekennzeichnet, daß das mehrwertige Phenol eine Verbindung der Formel I

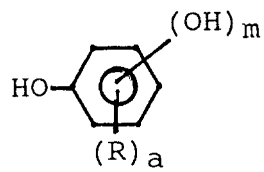

(I)

ist, worin

R $C_1$-$C_{18}$-, vorzugsweise $C_1$-$C_4$-Alkyl, Phenyl, $C_1$-$C_{18}$-Alkylphenyl oder $C_5$-$C_6$-Cycloalkyl,

m eine Zahl von 1 bis 5, vorzugsweise 1 oder 2, und

a eine Zahl von Null bis 4 bedeuten, wobei der Wert für a kleiner oder gleich der Differenz 5 minus m ist.

3. Umsetzungsprodukte nach Anspruch 1, dadurch gekennzeichnet, daß das mehrwertige Phenol eine Verbindung der Formel II

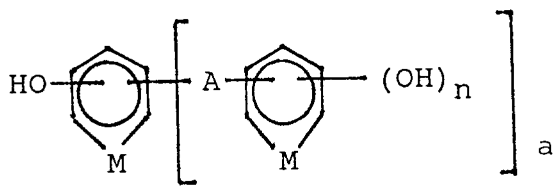

(II)

ist, wobei

n und a 1 oder 2 und

M eine Gruppe der Formel =CH- oder ein Heteroatom vorzugsweise ein Stickstoffatom

A eine direkte Bindung oder eine Gruppe der Formeln

$-CH_2-$,

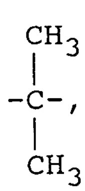

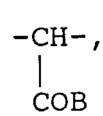

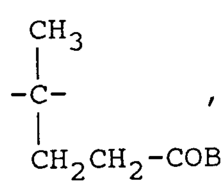

,

-SO-, -S-, $-SO_2-$, -S-S-, -CO-,

B eine Hydroxylgruppe oder eine Gruppe der Formeln

$-NH-(CH_2)_b-N(R)_2$ oder

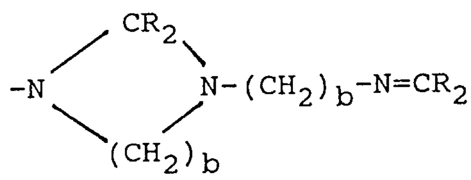

a eine Zahl von 1 bis 4, vorzugsweise 2 oder 3 bedeuten und R die in Anspruch 2 angegebene Bedeutung hat.

**4.** Umsetzungsprodukte nach Anspruch 1, dadurch gekennzeichnet, daß das mehrwertige Phenol eine Verbindung der Formel III

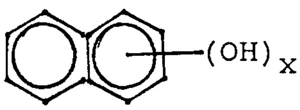
(III)

ist, worin
x 2 oder 3 bedeutet.

**5.** Umsetzungsprodukte nach Anspruch 1, dadurch gekennzeichnet, daß das mehrwertige Phenol eine Verbindung der Formel IV

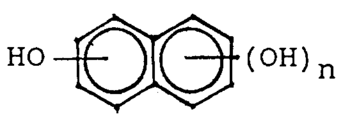
(IV)

ist, worin
n 1 oder 2 bedeutet.

**6.** Umsetzungsprodukte nach Anspruch 1, dadurch gekennzeichnet, daß das mehrwertige Phenol eine Verbindung der Formel V

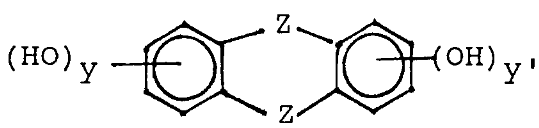
(V)

ist, worin
y und y' jeweils 0, 1 oder 2 bedeuten, die Summe von y und y' mindestens 2 beträgt und
Z eine Gruppe der Formeln =CH- oder C=O bedeutet.

**7.** Verfahren zur Herstellung der Umsetzungsprodukte nach Anspruch 1 bis 6, dadurch gekennzeichnet, daß man Dialkylzinnoxid und mehrwertiges Phenol bei 80 bis 200 °C in einem nicht oder nur teilweise mit Wasser mischbaren organischen Lösemittel unter Auskreisen des Reaktionswassers umsetzt.

**8.** Härtbare Mischungen bestehend im wesentlichen aus Bindemittel, Härter und Katalysator, dadurch gekennzeichnet, daß der Katalysator ein Umsetzungsprodukt nach einem oder mehreren der Ansprüche 1 bis 6 ist.

Europäisches Patentamt

# EUROPÄISCHER RECHERCHENBERICHT

Nummer der Anmeldung

EP 93 10 7312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-957 841 (IMPERIAL CHEMICAL INDUSTRIES LIMITED)<br>* das ganze Dokument *<br>--- | 1-8 | C07F7/22<br>C08G18/24<br>C09D5/44 |
| X | US-A-3 221 036 (WEISSENBERGER, G.)<br>* das ganze Dokument *<br>--- | 1-7 | |
| X | US-A-3 099 668 (ZWEIGLE, M.L. ET AL.)<br>* Beispiele 8,9 *<br>--- | 1-7 | |
| X | FR-A-1 487 752 (NITTO KASEI CO., LTD.)<br>* Beispiele 1,3 *<br>--- | 1-7 | |
| A<br><br>D | EP-A-0 436 135 (HERBERTS GMBH)<br>* das ganze Dokument *<br>& DE-A-3 940 781<br>----- | 1-8 | |
| | | | **RECHERCHIERTE SACHGEBIETE (Int. Cl.5 )** |
| | | | C07F<br>C08G<br>C09D |

Der vorliegende Recherchenbericht wurde für alle Patentansprüche erstellt

| Recherchenort | Abschlußdatum der Recherche | Prüfer |
|---|---|---|
| DEN HAAG | 20 JULI 1993 | RINKEL L.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)